# EUROPEAN PATENT SPECIFICATION

(11) **EP 3 118 387 B1**
(45) Date of publication and mention of the grant of the patent: **04.09.2019**
(21) Application number: 14885662.8
(22) Date of filing: 11.03.2014
(51) Int. Cl.: E04D 13/18, E04D 1/28, E04D 1/06, E04D 1/08, H02S 20/25

(54) **SOLAR ROOF TILE AND SOLAR ROOF TILE SYSTEM**
SOLARDACHZIEGEL UND SYSTEM AUS SOLARDACHZIEGELN
TUILE DE TOIT SOLAIRE ET SYSTÈME DE TUILES DE TOIT SOLAIRES

(43) Date of publication of application: 18.01.2017
(73) Proprietor: Guangdong Hua'chan Research Institute of Intelligent Transportation System Co., Ltd., Guangdong Province (CN)
(72) Inventor: GONG, Shugang, Shenzhen Guangdong 518104 (CN)
(74) Representative: Haseltine Lake Kempner LLP
(86) International application number: PCT/CN2014/073188
(87) International publication number: WO 2015/135126

(56) References cited:
- EP-A1- 2 398 059
- CN-A- 1 427 939
- CN-A- 102 704 632
- CN-A- 103 022 193
- CN-A- 103 206 049
- CN-Y- 2 851 398
- JP-A- H1 140 835
- JP-A- 2013 174 053
- US-A1- 2008 149 163

## Description

### TECHNICAL FIELD

The invention belongs to the field of application of solar panels, and more particularly to a solar tiles and solar tile system.

### BACKGROUND

A solar tile comprises a solar panel and a fixing substrate configured to support the solar panel, solar tiles can be arranged on the roof to convert solar energy into electrical energy for users. With increasing global energy consumption, environmental pollution becomes more serious day by day; the solar tile will be more widely applied because of advantages of environment friendly and energy-saving thereof. When the solar tiles are arranged on the roof, the solar tiles not only serve as "tiles" of the roof, but can also convert solar energy into electrical energy required by the user. Because the solar panel has a certain weight, requirements to the fixing substrate which is used to support and fix the solar panel is higher. However, to meet the requirements of structural strength and load capacity, the existing fixing substrate of the solar panel has large quality, which results in large pressure on the load-bearing substrate such as the roof, such that there are security risks, or to meet requirements of light quality, the existing fixing substrate of the solar panel doesn't has enough structural strength and load capacity, therefore can not firmly support and fix the solar panels, and thus can not attain light quality and light structural strength. Meanwhile, the existing fixing substrate of solar panels has defects of structural design, resulting in higher cost of solar tile, such that the solar tile can't be applied widely.

EP 2 398 059 A1 discloses a solar tile which comprises a solar panel, a fixing substrate configured to support the solar panel, and a circuit module disposed on the fixing substrate. The fixing substrate comprises a metal frame and a rubber layer cladding the metal frame. The solar panel is fixedly stacked on the fixing substrate.

CN 102 704 632 A discloses a monocrystalline (polycrystalline) crystal silicon solar cell assembly for use in building roof tiles.

### SUMMARY

Object of the present invention is to provide a solar tile, and to solve the problem that the existing fixing substrate of solar tiles is overweight and has low load capacity and the cost of solar tiles is high.

The technical solution of the present invention is: a solar tile comprising a solar panel, a fixing substrate configured to support the solar panel, and a circuit module disposed on the fixing substrate, the fixing substrate comprises a metal frame and a rubber layer cladding the metal frame, the solar panel is fixedly stacked on the fixing substrate, the metal frame comprises a plurality of beams which are spaced and parallel and a plurality of stringers which are connected to the beams and are spaced and parallel, characterized in that each of the beams comprises a first arc portion and two first horizontal portions extending horizontally from two edges of the first arc portion respectively, the two first horizontal portions are symmetrically arranged about a center line which is the central axis of the first arc portion; the stringer comprise a second arc portion and two second horizontal portions extending horizontally from two edges of the second arc portion respectively, the two second horizontal portions are symmetrically arranged about a center line which is the central axis of the second arc portion, the two first horizontal portions of the beam and the two second horizontal portions of the stringer are oppositely disposed and connected with each other.

More specifically, each of the beams is perpendicularly and crosswise connected with each of the stringers.

More specifically, along an axial direction thereof the beam comprises a horizontal section, a bent section disposed at one end of the horizontal section for hooking, a curved section provided on the other end of the horizontal section for hooking the bent section of the beam of an adjacent solar tile.

Specifically, the solar tile further comprises a weatherability coating covering the outer surface of the rubber layer.

More specifically, a side facing to the solar tile of a lower end of the fixing substrate is provided with a hook configured to fix the fixing substrate.

Specifically, the circuit module comprises a plug disposed on the fixing substrate and configured to output electric power.

More specifically, an upper end of the fixing substrate is provided with a mounting hole configured for fixing and mounting.

A solar tile system comprising a plurality of solar tiles mentioned above, and the plurality of solar tiles are connected to each other in a hook manner.

For the solar tile of the present invention, the fixing substrate used to support the solar tile comprises a metal frame and a rubber layer cladding the metal frame, since the metal frame is made of metal material, it is possible to provide sufficient support strength for the solar tile, the inner of the metal frame has great mutual restraint and containment forces due to the structure of the frame, the metal frame can withstand a certain deformation, and has good impact resistance and structural stability. Because the fixing substrate only comprises the metal frame and the rubber layer, the weight thereof is greatly reduced compared with a pure-metal structured fixing substrate. In addition, because the fixing substrate is made of less amount of metal material and has simple structure, the cost for manufacturing is reduced.

The present invention also provides a solar tile system comprising a plurality of solar tiles mentioned above, and the solar tiles are connected to each other through hooks, since the solar tiles provided by the present invention has light quality, good structural stability and load capacity, and lower manufacturing costs, the solar tile system of the present invention has high performance cost ratio.

### BRIEF DESCRIPTION OF THE DRAWINGS

FIG. 1 is a perspective view of the solar tile according to an embodiment of the present invention;
FIG. 2 is a perspective view of a metal frame of the solar tile in FIG. 1;
FIG. 3 is an enlarged schematic view of part C in FIG. 2;
FIG. 4 is a rear view of the solar tile in FIG. 1;
FIG. 5 is a sectional view along the A-A direction in FIG. 4;
FIG. 6 is a sectional view along the B-B direction of FIG. 4;
FIG. 7 is a schematic illustration of a solar tile system according to an embodiment of the present invention.

### DESCRIPTION OF EMBODIMENTS

To make the technical problem, technical solutions, and advantages of the present invention clearer, the following further describes the present invention in detail with reference to the accompanying drawings and embodiments. It should be understood that the specific embodiment described herein is merely used to explain the present invention but is not used to limit the present invention.

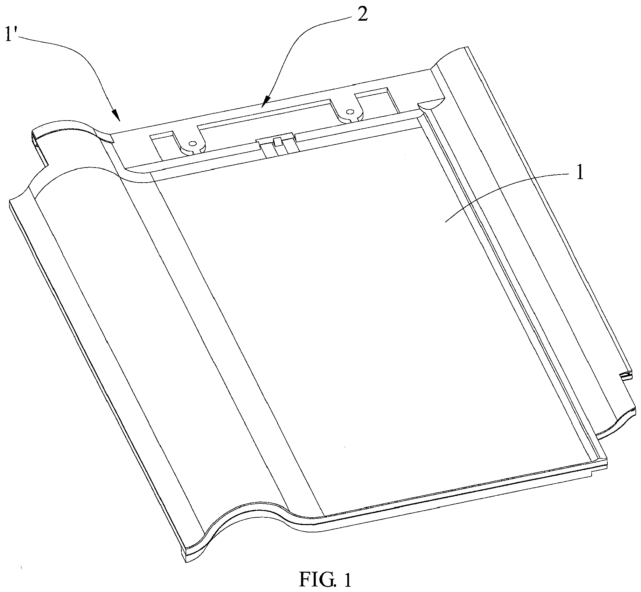

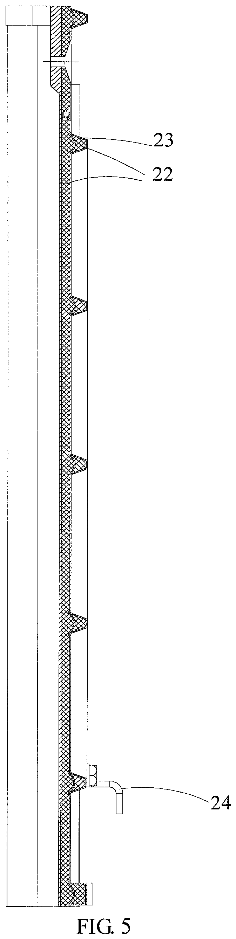

As shown in FIGS. 1-5, embodiments of the solar tile 1' of the present invention are provided. The solar tile 1' comprises a solar panel 1, a fixing substrate 2 configured to support the solar panel 1, and a circuit module disposed on the fixing substrate (not shown). The fixing substrate 2 comprises a metal frame 21 and a rubber layer 22 cladding the metal frame 21. Specifically, the metal frame 21 is a metal grid, the rubber layer 22 may be made of plastic such as rubber, ABS, etc.. The solar panel 1 is fixedly stacked on the fixing substrate 2, in particular, the solar panel 1 may be adhesively fixed to the fixing substrate 2. For the solar tile 1' of the present invention, the fixing substrate 2 used to support the solar panel comprises the metal frame 21 and therefore has better support strength; the metal frame 21 is cladded by the rubber layer 2, therefore the weight of the fixing substrate 2 is greatly reduced compared with the purely plate-shaped support, thereby reducing the pressure on the load-bearing substrate such as the roof, meanwhile the inner of the metal frame has great mutual restraint and containment forces due to the frame structure thereof, therefore the metal frame can withstand a certain deformation, and has good impact resistance and structural stability. In addition, because the fixing substrate is made of less amount of metal material and has simple structure, the cost for manufacturing is reduced.

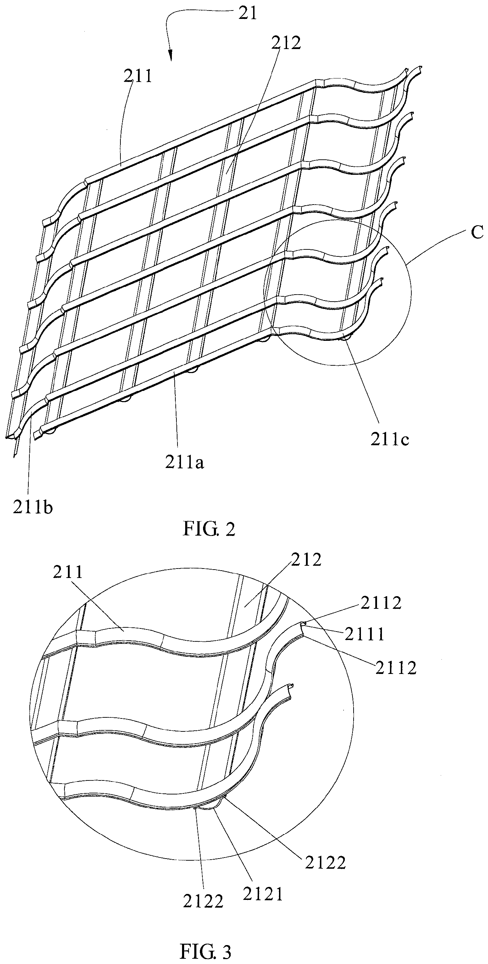

Specifically, as shown in FIG. 2, the metal frame 221 a plurality of beams 211 which are spaced and parallel and a plurality of stringers 212 which are connected to the beams 211 and are spaced and parallel. The beams 211 and the stringers 212 may be connected together through welding, and may be made of carbon steel (such as Q235 steel). The beams 211 and the stringers 212 are crosswise connected together, and restrain and restrict mutually, thereby forming a support frame structure with good stability, while can greatly reducing the amount of the steel compared with the steel plate, such that the weight is reduced.

Furthermore, each of the beams 211 is perpendicularly and crosswise connected with each of the stringers 212, such arrangement has simple structure, is easy to manufacture, and facilitates reducing production costs.

According to the invention, referring to FIG. 3, the beam 211 comprises a first arc portion 2111 and two first horizontal portions 2112 extending horizontally from two edges of the first arc portion 2111 respectively, the two first horizontal portions 2112 are symmetrically arranged about a center line which is the central axis of the first arc portion 2111; the stringer 212 comprise a second arc portion 2121 and two second horizontal portions 2122 extending horizontally from two edges of the second arc portion 2121 respectively, the two second horizontal portions 2122 are symmetrically arranged about a center line which is the central axis of the second arc portion 2121, the two first horizontal portions 2112 of the beam and the two second horizontal portions 2122 of the stringer are oppositely disposed and connected with each other. Because both of the beam 211 and the stringer 212 comprises the arc portion, and the arc portion has better structural stability and greater support strength as compared with a plate-shaped structure or a folded structure, and thus may provide stable support for the solar tile 1'. In order to facilitate connection, edges of the first arc portion 2111 of the beam 211 and edges of the second arc portion 2121 of the stringer 212 are respectively provided with the first horizontal portions 2112 and the second horizontal portions 2122, compared with welding the edges of the arc portions directly, such structure can increase the contact area and the welding area, thereby ensuring the stability of the connections between beams 211 and stringers 212 to ensure that the metal frame 21 has a sufficient support strength and structural stability. Meanwhile, compared with welding the cylindrical beams and stringers directly, such structure can greatly reduce the weight of the metal frame 21, so as to reduce the pressure on the load-bearing substrate such as the roof.

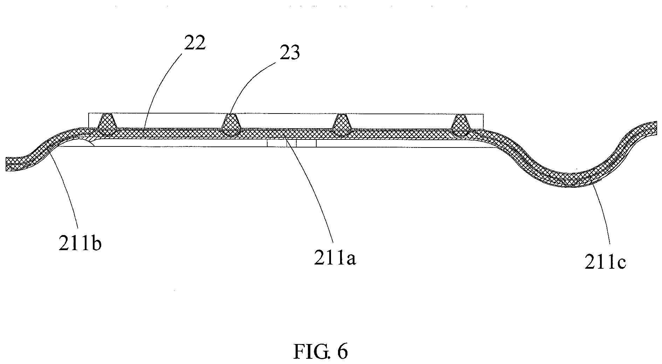

Furthermore, as shown in FIGS. 2 to 6, along an axial direction of the beam 211, the beam 211 comprises a horizontal section 211a, a bent section 211b disposed at one end of the horizontal section 211a and configured for hooking, a curved section 211c provided on the other end of the horizontal section 211a and configured for hooking the bent section 211c of the beam of an adjacent solar tile 1'. The solar tiles 1' restrain and restrict mutually by hooking the bent sections 211b with curved sections 211c of perspectives beams. When the solar tiles 1' are arranged on the roof to form the solar tile system, the stability of the whole solar tile system may be improved.

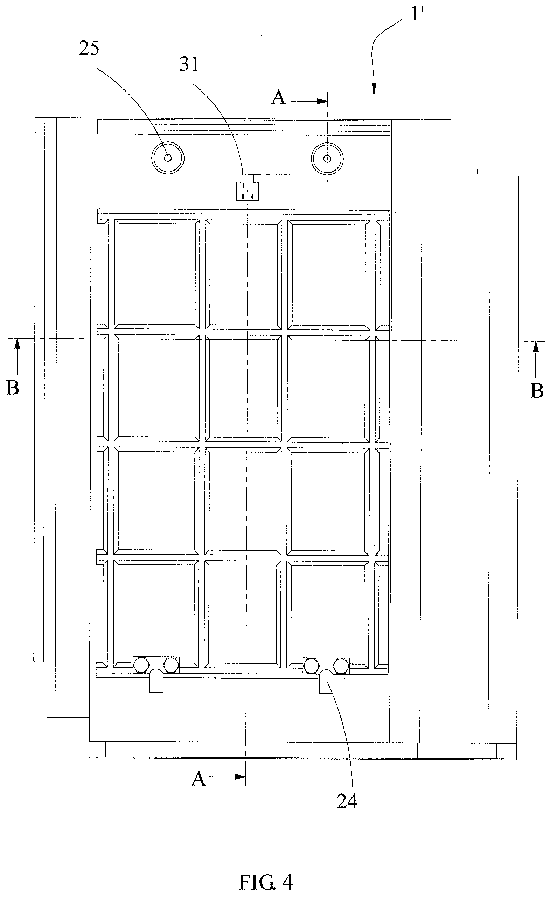

Specifically, as shown in FIGS. 4-6, the solar tile 1' further comprises a weatherability coating 23 covering the outer surface of the rubber layer 22, the weatherability coating 23 may be a polyurea coating, the polyurea has the features of corrosion resistance, water resistance, wear resistance and so on, and has stronger ability to adapt to the environment, such that the life of the fixing substrate 2 is improved.

Furthermore, a side facing to the solar panel 1 of a lower end of the fixing substrate 2 is provided with a hook 24 configured to fixed the fixing substrate 2. The hook 24 helps the fixing substrate 2 to be connected to the load-bearing substrate such as the roof in a hook manner, thereby facilitating assembling the solar tiles 1'.

Specifically, the circuit module comprises a plug 31 disposed on the fixing substrate 2 and configured to output electric power, the plug 31 may be inserted to the socket on the load-bearing substrate such as the roof, so that the electric power converted by the solar tiles 1' may be output.

Furthermore, an upper end of the fixing substrate 2 is provided with mounting holes 25 through which the fixing substrate 2 is fixedly mounted on the load-bearing substrate such as the roof, in particular, the fixing substrate 2 may be fixed by using screws, rivets and other locking element.

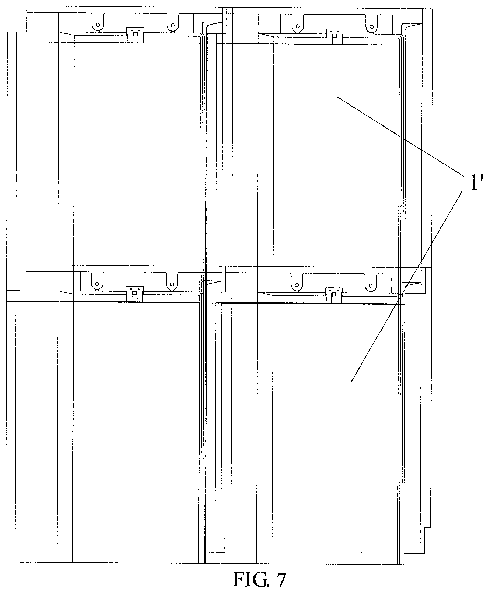

The present invention also provides a solar tile system shown in FIG. 7, the solar tile system comprises a plurality of the solar tiles 1', and the plurality of solar tiles 1' are connected to each other in a hook manner, such that the whole solar tile system is more stable. Since the solar tiles provided by the present invention has light quality, good structural stability and load capacity, and lower manufacturing costs, the solar tile system of the present invention has high performance cost ratio.

The foregoing descriptions are merely exemplary embodiment of the present invention, but are not intended to limit the present invention. The present invention is limited by the appended claims.

## Claims

1. A solar tile comprising a solar panel (1'), a fixing substrate (2) configured to support the solar panel (1'), and a circuit module disposed on the fixing substrate (2), the fixing substrate (2) comprises a metal frame (21) and a rubber layer (22) cladding the metal frame (21), the solar panel (1') is fixedly stacked on the fixing substrate (2), the metal frame (21) comprises a plurality of beams (211) which are spaced and parallel and a plurality of stringers (212) which are connected to the beams (211) and are spaced and parallel, **characterized in that** each of the beams (211) comprises a first arc portion (2111) and two first horizontal portions (2112) extending horizontally from two edges of the first arc portion (2111) respectively, the two first horizontal portions (2112) are symmetrically arranged about a center line which is the central axis of the first arc portion (2111); the stringer (212) comprise a second arc portion (2121) and two second horizontal portions (2122) extending horizontally from two edges of the second arc portion (2121) respectively, the two second horizontal portions (2122) are symmetrically arranged about a center line which is the central axis of the second arc portion (2121), the two first horizontal portions (2112) of the beam (211) and the two second horizontal portions (2122) of the stringer (212) are oppositely disposed and connected with each other.

2. The solar tile (1') of claim 1, **characterized in that** each of the beams (211) is perpendicularly and crosswise connected with each of the stringers (212).

3. The solar tile (1') of claim 1, **characterized in that** along an axial direction thereof the beam (211) comprises a horizontal section (211a), a bent section (211b) disposed at one end of the horizontal section (211a) for hooking, a curved section (211c) provided on the other end of the horizontal section (211a) for hooking the bent section (211b) of the beam of an adjacent solar tile (1').

4. The solar tile (1') of claim 1, **characterized in that** the solar tile (1') further comprises a weatherability coating covering the outer surface of the rubber layer.

5. The solar tile (1') of claim 1, **characterized in that** a side facing to the solar tile (1') of a lower end of the fixing substrate (2) is provided with a hook (24) configured to fixed the fixing substrate (2).

6. The solar tile (1') of claim 1, **characterized in that** the circuit module comprises a plug (31) disposed on the fixing substrate (2) and configured to output electric power.

7. The solar tile (1') of any of claims 1 to 6, **characterized in that** an upper end of the fixing substrate (2) is provided with a mounting hole (25) configured for fixing and mounting.

8. A solar tile system, **characterized in that** the solar tile system comprises a plurality of solar tiles (1') of any of claims 1 to 7, and the plurality of solar tiles (1') are connected to each other in a hook manner.

## Patentansprüche

1. Solardachziegel, umfassend ein Solarpanel (1'), eine zum Halten des Solarpanels (1') ausgelegte Trägerkonstruktion (2) und ein auf der Trägerkonstruktion (2) angeordnetes Schaltmodul, wobei die Trägerkonstruktion (2) einen Metallrahmen (21) und eine den Metallrahmen (21) umhüllende Gummischicht (22) umfasst, wobei das Solarpanel (1') fest auf der Trägerkonstruktion (2) angebracht ist, wobei der Metallrahmen (21) mehrere beabstandete und parallel verlaufende Querträger (211) und mehrere mit den Querträgern (211) verbundene beabstandete und parallel verlaufende Längsträger (212) umfasst, **dadurch gekennzeichnet, dass** jeder Querträger (211) einen ersten Bogenabschnitt (2111) und zwei sich horizontal von zwei Kanten des ersten Bogenabschnitts (2111) erstreckende erste horizontale Abschnitte (2112) aufweist, wobei die beiden ersten horizontalen Abschnitte (2112) symmetrisch zu einer die Mittelachse des ersten Bogenabschnitts (2111) bildenden Mittellinie angeordnet sind, wobei der Querträger (212) einen zweiten Bogenabschnitt (2121) und zwei sich horizontal von zwei Kanten des zweiten Bogenabschnitts (2121) erstreckende zweite horizontale Abschnitte (2122) umfasst, wobei die zwei zweiten horizontalen Abschnitte (2122) symmetrisch zu einer die Mittelachse des zweiten Bogenabschnitts (2121) bildenden Mittellinie angeordnet sind, wobei die zwei ersten horizontalen Abschnitte (2112) des Querträgers (211) und die zwei zweiten horizontalen Abschnitte (2122) des Längsträgers (212) gegenüberliegend angeordnet und miteinander verbunden sind.

2. Solardachziegel (1') gemäß Anspruch 1, **dadurch gekennzeichnet, dass** jeder Querträger (211) mit jedem Längsträger (212) senkrecht zueinander und kreuzförmig verbunden ist.

3. Solardachziegel (1') gemäß Anspruch 1, **dadurch gekennzeichnet, dass** der Querträger (211) entlang seiner Achsenrichtung einen horizontalen Abschnitt (211 a) und einen an einem Ende des horizontalen Abschnitts (211 a) angeordneten gebogenen Abschnitt (211 b) aufweist, um den am anderen Ende des horizontalen Abschnitts (211 a) vorgesehenen gekrümmten Abschnitt (211 c) in den gebogenen Abschnitt (211 b) des Querträgers des benachbarten Solardachziegels (1') einzuhängen.

4. Solardachziegel (1') gemäß Anspruch 1, **dadurch gekennzeichnet, dass** der Solardachziegel (1') ferner eine witterungsbeständige, die Außenfläche der Gummischicht bedeckende Beschichtung aufweist.

5. Solardachziegel (1') gemäß Anspruch 1, **dadurch gekennzeichnet, dass** die dem Solardachziegel (1') zugewandte Seite der unteren Trägerkonstruktion (2) mit einem Haken (24) versehen ist, der zur Fixierung der Trägerkonstruktion (2) ausgebildet ist.

6. Solardachziegel (1') gemäß Anspruch 1, **dadurch gekennzeichnet, dass** das Schaltmodul einen auf der Trägerkonstruktion (2) angeordneten und zur Abgabe von elektrischer Leistung ausgelegten Stecker (31) umfasst.

7. Solardachziegel (1') gemäß einem der Ansprüche 1 bis 6, **dadurch gekennzeichnet, dass** das obere Ende der Trägerkonstruktion (2) mit einem für die Montage und Befestigung ausgelegten Montageloch (25) versehen ist.

8. Solardachziegelsystem, **dadurch gekennzeichnet, dass** das Solardachziegelsystem eine Vielzahl von Solardachziegeln (1') gemäß einem der Ansprüche 1 bis 7 umfasst und die Vielzahl von Solardachziegeln (1') durch Haken miteinander verbunden sind.

## Revendications

1. Une tuile solaire comprenant un panneau solaire (1'), un substrat de fixation (2) configuré pour supporter le panneau solaire (1'), et un module de circuit disposé sur le substrat de fixation (2), le substrat de fixation (2) comprend un cadre métallique (21) et une couche de caoutchouc (22) recouvrant le cadre métallique (21), le panneau solaire (1') est empilé de manière fixe sur le substrat de fixation (2), le cadre métallique (21) comprend une pluralité de poutres (211) qui sont espacées et parallèles et une pluralité de longerons (212) qui sont reliés aux poutres (211) et sont espacés et parallèles, **caractérisé en ce que** chacune des poutres (211) comprend une première partie en arc (2111) et deux premières parties horizontales (2112) s'étendant horizontalement à partir de deux bords de la première partie en arc (2111) respectivement, les deux premières parties horizontales (2112) sont disposées symétriquement autour d'une ligne centrale qui est l'axe central de la première partie en arc (2111) ; le longeron (212) comprend une seconde partie en arc (2121) et deux secondes parties horizontales (2122) s'étendant horizontalement à partir de deux bords de la seconde partie en arc (2121) respectivement, les deux secondes parties horizontales (2122) sont disposées symétriquement autour d'une ligne centrale qui est l'axe central de la seconde partie en arc (2121), les deux premières parties horizontales (2112) de la poutre (211) et les deux secondes parties horizontales (2122) du longeron (212) sont disposées de manière opposée et reliées les unes avec les autres.

2. La tuile solaire (1') selon la revendication 1, **caractérisée en ce que** chacune des poutres (211) est reliée perpendiculairement et transversalement à chacun des longerons (212).

3. La tuile solaire (1') selon la revendication 1, **caractérisée en ce que** le long d'une direction axiale de celle-ci, la poutre (211) comprend une section horizontale (211a), une section courbée (211b) disposée à une extrémité de la section horizontale (211a) pour accrochage, une section incurvée (211c) prévue sur l'autre extrémité de la section horizontale (211a) pour accrocher la section courbée (211b) de la poutre d'une tuile solaire adjacente (1').

4. La tuile solaire (1') selon la revendication 1, **caractérisée en ce que** la tuile solaire (1') comprend en outre un revêtement résistant aux intempéries couvrant la surface extérieure de la couche de caoutchouc.

5. La tuile solaire (1') selon la revendication 1, **caractérisée en ce qu'**un côté faisant face à la tuile solaire (1') d'une extrémité inférieure du substrat de fixation (2) est pourvu d'un crochet (24) configuré pour fixer le substrat de fixation (2).

6. La tuile solaire (1') selon la revendication 1, **caractérisée en ce que** le module de circuit comprend une prise (31) disposée sur le substrat de fixation (2) et configurée pour fournir une puissance électrique.

7. La tuile solaire (1') selon l'une quelconque des revendications 1 à 6, **caractérisée en ce qu'**une extrémité supérieure du substrat de fixation (2) est pourvue d'un trou de montage (25) configuré pour la fixation et le montage.

8. Un système de tuile solaire, **caractérisé en ce que** le système de tuile solaire comprend une pluralité de tuiles solaires (1') selon l'une quelconque des revendications 1 à 7, et la pluralité de tuiles solaires (1') sont reliées les unes aux autres à la manière d'un crochet.
